# EUROPEAN PATENT SPECIFICATION

(11) **EP 0 412 633 B1**
(45) Date of publication and mention of the grant of the patent: **14.12.1994**
(21) Application number: 90303767.9
(22) Date of filing: 09.04.1990
(51) Int. Cl.: A23N 7/01, A23P 1/00

(54) **Process for enzyme peeling of fresh citrus fruit**
Verfahren zum enzymatischen Abschälen von frischen Zitrusfrüchten
Procédé pour peler des fruits citriques frais au moyen d'enzymes

(30) Priority: 19.04.1989 US 340278; 16.08.1989 US 394567
(43) Date of publication of application: 13.02.1991
(73) Proprietor: SUNKIST GROWERS, INC., Ontario California 91761 (US)
(72) Inventor: Adams, Bruce, Pomona, California 91767 (US); Kirk, William, Alta Loma, California 91701 (US)
(74) Representative: Enskat, Michael Antony Frank

(56) References cited:
- US-A- 4 284 651
- DATABASE WPI/DERWENT accession no. 76-85864X (46),1976, Derwent Publications Ltd., London, GB; & JP - A- 51110056 (KAO SOAP K.K.) 30.09.1976
- DATABASE WPIL/DERWENT accession no. 81-71027D (39),
- 1981, Derwent Publications Ltd., London, GB; & JP - A- 50070547 (TANABE SEIYAKU K.K.) 12.06.1975
- DATABASE WPI/DERWENT accession no. 78-59893A (33),1978, Derwent Publications Ltd., London, GB; & JP - A- 50145542 (TOYO SEIKAN KAISHA) 21.11.1975

## Description

This invention relates generally to processes for peeling fresh citrus fruit and, more particularly, to such processes that utilize the infusion of a pectinase enzyme into the fruit.

An example of a pectinase enzyme-infusion process of this particular kind is described in U.S. Patent No. 4,284,651 to Bruemmer. In the described process, washed citrus fruit such as oranges and grapefruit are initially heated to a surface temperature of about 40 to 60 degrees C and a core temperature of about 20 to 40 degrees C, after which the peel surface of the fruit is scored so as to penetrate the fruit's albedo or white layer, but not penetrate the fruit's juice segments. An aqueous solution of a pectinase enzyme is then vacuum infused into the fruit's albedo, at a vacuum of about 84.66 x 10³ Pa to 101.59 x 10³ Pa (25 to 30 inches of mercury). After incubating the fruit for a period of 15 minutes to two hours, at a temperature of about 30 to 60 degrees C, the peel and other membrane material are removed from the fruit and the exposed fruit segments are separated from each other, with most of the segment membranes remaining intact. The fruit segments can be then be refrigerated for extended durations, while retaining a fresh fruit flavor and appearance.

Although the process described briefly above has proven to be generally satisfactory in providing individual fruit segments having a fresh fruit flavor and appearance, it is believed that the process can be improved upon in several respects. For example, it is believed that a still higher proportion of individual fruit segments can be separated without damaging the segment's membrane and with less adhered albedo. In addition, it is believed that this improved performance can be achieved while at the same time eliminating the need to heat the fruit and the enzyme solution. This significantly simplifies the process and reduces costs.

It should, therefore, be appreciated that there is a need for an improved process for enzyme peeling fresh citrus fruit, which is effective in providing increased ease in peeling and reduced adhering albedo and which avoids the need to heat the fresh fruit or the enzyme solution. The present invention fulfils this need.

The present invention resides in a process for peeling fresh citrus fruit, in which a pectinase enzyme solution is infused into the fruit in a way that enables the peel to be removed and individual fruit segments to be separated from each other with fewer of the segments being damaged and/or carrying adhered albedo. The process of the invention achieves these improved results by processing the fresh fruit at a cooler temperature than was done in the past. In addition to providing peeled fruit with less adhered albedo and a greater proportion of whole fruit segments, the process of the invention also facilitates use of the pectinase enzyme solution to process a greater number of fresh fruit, over an extended duration. Avoiding the need to excessively heat the fruit and/or the enzyme solution, and re-using the solution with multiple fruit, significantly reduces processing costs.

More particularly, the process of the invention includes an initial step of maintaining the core and surface temperature of the fresh citrus fruit at a temperature of about 20 degrees C prior to breaking the peel surface which is then broken (e.g. scored) so as to penetrate the fruit's albedo layer, but not its juice segments. An aqueous solution of pectinase enzyme is then vacuum- or pressure-infused into the scored fruit, after which the fruit is stored at a temperature of about 20 degrees C for a prescribed duration, to allow the pectinase to break down the pectin present in the albedo. The fruit peel can then be readily removed and the individual fruit segments readily separated from each other, with a large proportion of the fruit segments remaining completely intact.

In a more detailed feature of the invention, the citrus fruit are maintained at a temperature of about 20 degrees C, i.e., room temperature, throughout the entire process. Maintaining the fruit and the pectinase enzyme solution at this temperature avoids the need for any heating apparatus at all and ensures that the enzyme solution will retain its effectiveness for an extended time period, whereby the solution can be used repeatedly for multiple batches of fresh citrus fruit. The solution need only be replenished each time, to replace the portion infused into, and carried away by, the fruit. Operating at room temperature also reduces the degree of refrigeration required later to lower the fruit's temperature for storage and shipping, typically about 2 degrees C.

Other features and advantages of the present invention will become apparent from the following description of the preferred processes, which illustrate, by way of example, the principles of the invention.

The invention resides in a process for preparing individual fruit segments from fresh citrus fruit using an aqueous solution of a pectinase enzyme. The solution is infused into the albedo, or white layer, of the citrus fruit peel, to break down the pectin contained in the albedo and thereby to facilitate an easy removal of the peel and separating of the individual fruit segments. Pectinase is a natural product of mold growth and is approved for food use by the United States Food and Drug Administration. Pectinase is commonly used commercially in a variety of food applications, such as clarification and stabilization of fruit juices. The process of the invention can be used particularly effectively with Valencia and navel oranges, grapefruit, and lemons.

In an initial step of the process, the peel of a batch of fresh citrus fruit is scored or otherwise broken so as to barely penetrate the peel's thick albedo layer, but not to penetrate any of the underlying fruit segments or segment membranes. The fruit preferably are each scored into six substantially equal-sized wedge sections, extending from the stem to the blossom end. Many other ways of breaking the peel also are suitable, including scoring the peel with a single- or multiple-ring pattern or a spiral pattern, and even grating or randomly scratching the peel. The scored fruit are then placed in an aqueous solution of pectinase enzyme, preparatory to the infusion. NOVO Pectinex 5XL is one suitable pectinase enzyme, and it an be used at a concentration of 1,000 ppm (i.e. 1.0 milliliter per liter) in tap water. Another suitable pectinase enzyme is Rohm Tech D5L enzyme.

The pectinase enzyme solution is infused into the scored fruit using either a vacuum process or a pressure process. In the case of a vacuum infusion, the fruit and enzyme solution are placed together in a vacuum chamber and a vacuum of 84.66 x 10³ Pa to 101.59 x 10³ Pa, (25 to 30 inches of mercury) is then applied, to draw off air from the fruit peel. Releasing the vacuum then infuses the enzyme solution into the minute spaces in the peel previously occupied by air. A medium-sized orange (size 113) typically will draw in about 30 milliliters of the enzyme solution.

In the case of pressure infusion, on the other hand, the fruit and enzyme solution are placed together in a pressure chamber, and a series of positive pressure pulses (e.g., six to ten) is applied to the chamber. The pressure pulses preferably each have a pressure of about 137.88 x 10³ Pa to 275.76 x 10³ Pa (20 to 40 p.s.i.), relative, and a duration of about 15 seconds. The pressure pulses are separated from each other by periods of 0 Pa (O p.s.i.), relative, having durations of about 5 seconds each. Pulsing the pressure is believed to cause the fruit peel to flex, which helps to work the enzyme solution throughout the peel.

The pectinase enzyme-infused fruit are then removed from the vacuum or pressure chamber and placed into storage tubs at room temperature for 45 minutes to two hours. This allows the enzyme to break down the pectin in the fruit's albedo. The fruit peel can thereafter be readily removed with only minimal amounts of albedo clinging to the fruit sections. In addition, the fruit segments can be readily separated from each other without damaging the segment membranes. Because of the minimal damage to the segment membranes, the separated fruit segments can be stored under refrigeration for appearance and flavor.

In accordance with the invention, enhanced results can be realized if the entire process is performed at temperatures substantially lower than in the past. In particular, it has been found that operating at substantially room temperature, i.e., about 20 degrees C, results in an improved ease in peeling and sectioning, and in a reduced amount of adhering albedo. In addition, maintaining the pectinase enzyme solution at a temperature at or below 26 degrees C retards a breakdown of the enzyme so that it can thereafter be used for an extended time on additional batches of fresh citrus fruit. Successive batches of fruit can be processed effectively using the same enzyme solution merely by replenishing the solution each time to replace the amount infused into the previous batch of fruit. Such repeated use is not an entirely effective technique at higher temperatures used in the past, because the enzyme solution appears to provide reduced effectiveness upon re-use. Processing at the lower temperature of about 20 degrees C eliminates the need for special heating apparatus and reduces the degree of refrigeration required later to lower the fruit's temperature to that ordinarily called for in storage and shipping, i.e., typically about 2 degrees C, which significantly reduces the complexity and cost of the process and which increases safety.

The improvements in peeling and sectioning of the fruit resulting from infusing the enzyme at a lower temperature is shown by Examples 1-3, set forth below.

### Example 1

In this example, which corresponds generally with the process described in U.S. Patent No. 4,284,651 to Bruemmer, 28 size-88 navel oranges and 16 size-40 ruby grapefruit were washed and brought to a peel temperature roughly equal to room temperature, or 20 degrees C. The fruit peel was then scored into six equal sections, from stem to blossom end, and placed in a vacuum chamber. Included with the fruit in the vacuum chamber was a solution of 1000 ppm NOVO Pectinex 5XL enzyme in tap water. The solution temperature was maintained at 42 to 48 degrees C, with no pH adjustment. A vacuum of 91.43 x 10³ Pa to 101.59 x 10³ Pa (27 to 30 inches of mercury) was then applied to the fruit for a time period of two to three minutes.

Following the vacuum infusion treatment, the fruit were removed from the vacuum chamber and placed into a plastic tub for storage at room temperature for one to two hours, to allow the enzyme to break down the pectin in the albedo. The fruit were subsequently peeled by hand and exhibited only a fair degree of ease in peeling and sectioning and exhibited a significant amount of adhering albedo.

### Example 2

The same numbers and kinds of citrus fruit as were used in Example 1 were used in this example. The only difference between the process of Example 1 and that of this example was that the pectinase enzyme solution was maintained at a temperature of 20-22 degrees C, rather than 42-48 degrees C. The fruit exhibited significantly improved ease in peeling and sectioning and a reduced amount of adhering albedo. What little albedo remained adhered could be readily stripped with a light brushing under a rinse.

### Example 3

In this example, the same numbers and kinds of citrus fruit as were used in Examples 1 and 2 were processed. The only difference between the process of this example and that of Example 2 was that the fruit and pectinase enzyme solution were placed in a pressure chamber, rather than a vacuum chamber, and a series of positive pressure pulses was applied. In particular, about ten successive 15-second pressure pulses of 206.84 x 10³ Pa (30 p.s.i.), relative, were applied, separated from each other by 5-second periods of O Pa (O p.s.i.), relative. The fruit processed in accordance with this example exhibited significantly improved ease in peeling and sectioning and a significantly reduced amount of adhering albedo.

The fruit processed in the processes of Examples 1, 2 and 3 were individually graded on a scale of 1 to 4 for peeling ease, lack of adhering albedo, and sectioning ease. A grade of 1 indicated good, 2 indicated moderately good, 3 indicated fair, and 4 indicated poor. The mean grades for navel oranges processed in accordance with the processes of Examples 1, 2 and 3 are indicated in Table 1, and the mean grades for ruby grapefruit processed in accordance with the same processes are indicated in Table 2. It will be noted that significant improvement in each category is provided by infusing the pectinase enzyme solution at 20 degrees C (Example 2), as contrasted with 45 degrees C (Example 1). It also will be noted that infusing the solution at 20 degrees C under pressure (Example 3) also provides significant improvement in each category over vacuum infusion (Example 1) at the higher, 45-degree C temperature.

**TABLE 1**

| Oranges | | | |
|---|---|---|---|
| | Ease in Peeling | Lack of Adhering Albedo | Ease in Sectioning |
| Example 1 | 3.43 | 3.43 | 3.00 |
| Example 2 | 1.61 | 2.54 | 2.39 |
| Example 3 | 1.18 | 2.11 | 2.29 |

**TABLE 2**

| Grapefruit | | | |
|---|---|---|---|
| | Ease in Peeling | Lack of Adhering Albedo | Ease in Sectioning |
| Example 1 | 2.75 | 2.69 | 3.19 |
| Example 2 | 1.44 | 2.69 | 2.88 |
| Example 3 | 1.13 | 2.25 | 2.38 |

Improved effectiveness of the enzyme infusion process at colder temperatures than previously considered optimum also is demonstrated by a second series of tests, conducted in accordance with the following Examples 4-6.

### Examples 4-6

In Examples 4-6, six to eight navel and Valencia oranges having an initial peel temperature of about 20 degrees C were washed and scored into six equal sections, from stem to blossom end, and placed in a vacuum chamber with a solution of 1000 ppm Rohm Tech D5L enzyme in tap water. The solution was maintained at a temperature of about 16 degrees C in Example 4, about 25 degrees C in Example 5, and about 50 degrees C in Example 6. After the infusion and storage at room temperature for about 45 minutes, the fruit were rated for ease of peeling, extent of albedo removal, and ease of section separation. The results, based on a scale of 1 to 6, with 1 being best and 6 being worst, are presented in Table 3 (navel oranges) and Table 4 (Valencia oranges). It will be noted that significantly better results are provided in all three categories at 16 degrees C and 25 degrees C than at 50 degrees C.

**TABLE 3**

| NAVAL ORANGES | | | |
|---|---|---|---|
| | Ease in Peeling | Lack of Adhering Albedo | Ease in Sectioning |
| Example 4 (16°C) | 2.8 | 4.0 | 4.0 |
| Example 5 (25°C) | 2.0 | 2.0 | 2.0 |
| Example 6 (50°C) | 5.6 | 5.8 | 4.0 |

**TABLE 4**

| VALENCIA ORANGES | | | |
|---|---|---|---|
| | Ease in Peeling | Lack of Adhering Albedo | Ease in Sectioning |
| Example 4 (16°C) | 3.0 | 2.1 | 2.1 |
| Example 5 (25°C) | 1.6 | 1.1 | 1.0 |
| Example 6 (50°C) | 5.1 | 4.5 | 4.2 |

Infusing the enzyme at temperatures of 35 degrees C and less also enables the enzyme solution to be reused with multiple batches of fruit. In fact, in the preferred process, the vacuum (or pressure) chamber is simply replenished periodically with additional enzyme solution to replace the solution infused into and carried away by, the previous batch of fruit. The effectiveness of the enzyme solution in such repeated uses is shown in Examples 7 and 8 and Tables 5 and 6.

### Example 7

Seven successive batches of size-113 Valencia oranges (six per batch) having an initial peel temperature of about 20 degrees C were washed and scored into six equal sections, from stem to blossom end, and placed in a vacuum chamber with a solution of 1000 ppm Rohm Tech D5L enzyme in tap water. The solution was maintained at a temperature of about 15 degrees C, using ice, and it was replenished following infusion into each successive batch. Each infusion occurred using a vacuum of about 193.05 x 10³ Pa (28 p.s.i.) applied for about two minutes. After removal from the chamber and storage at room temperature for about 50 to 55 minutes, each batch was rated on a scale of 1 to 6 for ease in peeling, lack of adhering albedo, and ease in sectioning. The results of the rating, which are presented in Table 5, show no significant degradation in effectiveness with successive batches.

**TABLE 5**

| VALENCIA ORANGES 15°C | | | |
|---|---|---|---|
| Batch No | Ease in Peeling | Lack of Adhering Albedo | Ease in Sectioning |
| 1 | 2.00 | 2.17 | 2.17 |
| 2 | 2.33 | 2.33 | 2.00 |
| 3 | 2.67 | 2.50 | 1.67 |
| 4 | 1.33 | 1.67 | 2.33 |
| 5 | 3.17 | 3.00 | 1.67 |
| 6 | 2.17 | 2.50 | 1.50 |
| 7 | 1.83 | 1.83 | 1.83 |
| Average for all batches | 2.21 | 2.28 | 1.93 |

### Example 8

Ten successive batches of size-113 Valencia oranges (six per batch) were processed in the same fashion as in Example 7, except that the enzyme solution was maintained at a temperature of about 35 degrees C. The results of the rating are set forth in Table 6, which shows no significant degradation in effectiveness with successive batches.

**TABLE 6**

| VALENCIA ORANGES (35°C) | | | |
|---|---|---|---|
| Batch No. | Ease in Peeling | Lack of Adhering Albedo | Ease in Sectioning |
| 1 | 1.50 | 2.17 | 1.33 |
| 2 | 1.17 | 2.00 | 2.17 |
| 3 | 1.00 | 1.67 | 1.33 |
| 4 | 1.33 | 2.00 | 1.17 |
| 5 | 1.83 | 2.33 | 1.67 |
| 6 | 1.67 | 2.17 | 2.00 |
| 7 | 2.00 | 2.00 | 1.33 |
| 8 | 2.50 | 2.67 | 1.67 |
| 9 | 2.67 | 2.83 | 1.50 |
| 10 | 2.17 | 1.83 | 1.83 |
| Average for all batches | 1.78 | 2.17 | 1.63 |

In additional tests, not quantitatively analyzed, it was found that maintaining the enzyme solution at a temperature of about 50 degrees C resulted in the solution having little or no effectiveness when reused on multiple batches of fruit.

The effect that pressure magnitude has on the degree of infusion of the pectinase enzyme into the albedo is shown by Examples 9-12, set forth below.

### Example 9

The peels of 15 size-113 navel oranges were scored into six equal sections, from stem to blossom end, and the scored fruit were placed in a six-gallon pressure cooker. Included with the fruit in the pressure cooker was a solution of 500 ppm Rohm Tech D5L enzyme in tap water, at a temperature of about 26 degrees C. A constant pressure of about 68.95 x 10³ Pa (10 p.s.i.), relative, was then applied to the fruit and enzyme solution for a period of about two minutes.

Following the pressure treatment, the fruit were peeled and judged as to the percentage dry portion of the albedo, corresponding to the amount of albedo not infused with the enzyme solution. In the judging a score of 1 indicated 0 percent dry albedo, 2 indicated 1-10 percent dry albedo, 3 indicated 10-30 percent dry albedo, 4 indicated 30-60 percent dry albedo, and 5 indicated 60-100 percent dry albedo. As set forth in Table 7 below, the fruit in this Example 9 were judged to have an average score of 3.47, indicating only a fair infusion of enzyme into the albedo was accomplished.

### Example 10

Fifteen size-113 navel oranges were processed in the same fashion as in Example 9, except that a pressure of about 137.88 x 10³ Pa (20 p.s.i.) was applied. As set forth in Table 7, the fruit in this Example 10 were judged to have a significantly reduced percentage of dry albedo, as compared with the fruit in Example 9.

### Example 11

Fifteen size-113 navel oranges were processed in the same fashion as in Examples 9 and 10, except that a pressure of about 206.82 x 10³ Pa (30 p.s.i.) was applied. As set forth in Table 7, the fruit were judged to have a percentage of dry albedo comparable to that of Example 10.

### Example 12

Fifteen size-113 navel oranges were processed in the same fashion as in Example 9-11, except that a pressure of about 275.76 x 10³ Pa (40 p.s.i.) was applied. As set forth in Table 7, the fruit were judged to have a percentage of dry albedo comparable to that of Examples 10 and 11.

**TABLE 7**

| Extension of Infusion | | |
|---|---|---|
| | | Score |
| Example 9 | 68.95 x 10³ Pa (10 p.s.i.) | 3.47 |
| Example 10 | 137.88 x 10³ Pa (20 p.s.i.) | 2.33 |
| Example 11 | 206.82 x 10³ Pa (30 p.s.i.) | 2.20 |
| Example 12 | 275.76 x 10³ Pa (40 p.s.i.) | 2.20 |

It should be appreciated from the foregoing description that the present invention provides an improved process for preparing individual fruit segments from fresh citrus fruit, with improved ease of peeling and sectioning and with reduced amounts of adhering albedo. An aqueous solution of a pectinase enzyme is vacuum- or pressure-infused into the fruit and, after then storing the infusion-treated fruit for a prescribed time period, the peel and other membrane material can be readily removed from the fruit and the individual fruit segments readily separated from each other. Maintaining the pectinase enzyme solution at approximately room temperature, rather than an elevated temperature, significantly improves the ease of peeling and sectioning and reduces the amount of adhering albedo, and it also eliminates the need for special apparatus for heating the fruit and/or the enzyme solution and allows the solution to be reused to treat multiple batches of fruit.

## Claims

1. A process for peeling fresh citrus fruit comprising
(a) breaking the peel surface of the fruit so as to penetrate the albedo layer, but not penetrate the juice sections;
(b) infusing a solution of pectinase warmed to a temperature of about 35°C before infusion into the fruit;
(c) storing the infusion-treated fruit for a prescribed period;
(d) removing the peel and other membrane material from the fruit;
characterised in that the core and surface temperatures of the fruit are maintained at a temperature of about 20°C prior to breaking the peel surface and the infusion treated fruit is stored without the application of external heat and wherein steps (a) to (d) are repeated on additional fresh citrus fruit using the same aqueous solution of pectinase as was used initially in step (b).

2. A process as claimed in Claim 1, wherein the infusion-treated fruit are stored in the step of storing for about 45 minutes to about two hours prior to the following step of removing.

3. A process as claimed in Claim 1 or Claim 2, wherein the step of infusing includes a step of placing the scored fruit with the aqueous solution of pectinase in a vacuum chamber at a vacuum of about 84.66 x 10³ - 101.59 x 10³ Pa (25 to 30 inches of mercury).

4. A process as claimed in any one of Claims 1 to 3, wherein:
the step of repeating includes a step of replenishing the aqueous solution of pectinase, to replace the portion of the solution infused into, and carried away by, the fresh citrus fruit; and
the step of repeating itself, is repeated a plurality of times.

5. A process as claimed in Claim 1, wherein following immersion of the fruit in an aqueous solution of pectinase a plurality of positive pressure pulses are applied to the immersed fruit, to infuse the solution into the fruit.

6. A process as claimed in Claim 5, wherein the pressure pulses applied in the step of immersing and applying have pressures of about 137.88 x 10³ - 275.76 x 10³ (20 to 40 p.s.i.), relative, and are separated from each other by periods having pressures of about 0 Pa (0 p.s.i.), relative.

7. A process as claimed in Claim 5 or Claim 6, wherein the pressure pulses applied in the step of immersing and applying each have durations of about 15 seconds and are separated from each other by periods having durations of about 5 seconds.

8. A process as claimed in any one of preceding claims, further including a step, following the step of removing, of separating the individual fruit segments from each other.

## Patentansprüche

1. Verfahren im Schälen von frischen Zitrusfrüchten, bei dem
(a) die Schalenoberfläche der Früchte gebrochen wird, um in die Albedoschicht vorzudringen, aber nicht in die Saftabschnitte einzudringen,
(b) eine Pektinaselösung, die vor der Infusion auf eine Temperatur von etwa 35°C erwärmt worden ist, in die Früchte infundiert wird,
(c) die infusionsbehandelten Früchte für eine vorgeschriebene Zeitdauer gelagert werden,
(d) die Schale und weiteres Hautmaterial von den Früchten entfernt werden,
dadurch gekennzeichnet, daß die Innen- und Außentemperaturen der Früchte auf einer Temperatur von etwa 20°C gehalten werden, bevor die Oberfläche der Schale gebrochen wird, und die infusionsbehandelten Früchte ohne Anwendung von Fremdwärme gelagert werden, und daß die Stufen (a) bis (d) mit zusätzlichen frischen Zitrusfrüchten unter Verwendung der selben wäßrigen Pektinaselösung, die anfangs in Stufe (b) verwendet worden ist, wiederholt werden.

2. Verfahren nach Anspruch 1, bei dem die infusionsbehandelten Früchte in der Lagerungsstufe etwa 45 Minuten bis etwa 2 Stunden vor der nachfolgenden Entfernungsstufe gelagert werden.

3. Verfahren nach Anspruch 1 oder Anspruch 2, bei dem die Infusionsstufe eine Stufe einschließt, in der die eingekerbten Früchte mit der wäßrigen Pektinaselösung in eine Vakuumkammer mit einem Vakuum von etwa 84,66 x 10³ bis 101,59 x 10³ Pa (25 bis 30 Inches Quecksilber) gebracht werden.

4. Verfahren nach einem der Ansprüche 1 bis 3, bei dem die Wiederholungsstufen eine Stufe einschließen, in der die wäßrige Pektinaselösung ergänzt wird, um den Teil der Lösung zu ersetzen, der in die frischen Zitrusfrüchte infundiert und von diesen ausgetragen wurde, und diese Wiederholungsstufen selbst mehrere Male wiederholt werden.

5. Verfahren nach Anspruch 1, bei dem nach dem Eintauchen der Früchte in eine wäßrige Pektinaselösung eine Vielzahl positiver Druckimpulse auf die eingetauchten Früchte ausgeübt werden, um die Lösung in die Früchte zu infundieren.

6. Verfahren nach Anspruch 5, bei dem die in der Stufe, in der eingetaucht und Druck ausgeübt wurde, angewendeten Druckimpulse relative Drücke von etwa 137,88 x 10³ bis 275,78 x 10³ Pa (20 bis 40 psi) haben und voneinander durch Zeiträume mit relativen Drücken von etwa 0 Pa (0 psi) getrennt sind.

7. Verfahren nach Anspruch 5 oder Anspruch 6, bei dem die in der Stufe, in der eingetaucht und Druck ausgeübt wurde, ausgeübten Druckimpulse jeweils etwa 15 Sekunden dauern und voneinander durch Zeiträume mit einer Dauer von etwa 5 Sekunden getrennt sind.

8. Verfahren nach einem der vorhergehenden Ansprüche, das außerdem nach der Entfernungsstufe eine Stufe einschließt, in der die einzelnen Fruchtsegmente voneinander getrennt werden.

## Revendications

1. Procédé destiné à enlever l'écorce d'un agrume frais comprenant les étapes consistant à:
a) entailler la surface de zeste du fruit de manière à pénétrer la couche d'écorce blanche mais à ne pas pénétrer les sections à jus,
b) faire infuser une solution de pectinase, chauffée à une température d'environ de 35°C avant l'infusion, dans le fruit,
c) stocker le fruit traité par infusion pendant une durée prescrite,
d) éliminer le zeste et les autres membranes du fruit,
caractérisé en ce qu'on maintient les températures du coeur et de la surface du fruit à une température d'environ 20°C avant l'entaille de la surface de zeste et en ce qu,on stocke le fruit traité par infusion sans appliquer de chaleur externe et dans lequel on répète les étapes (a) à (d) sur un agrume frais supplémentaire en utilisant la même solution aqueuse de pectinase que celle utilisée initiallement au cours de l'étape (b).

2. Procédé selon la revendication 1, dans lequel on stocke le fruit traité par infusion dans l'étape de stockage pendant environ 45 min à environ 2 heures avant l'étape suivante d'élimination.

3. Procédé selon la revendication 1 ou la revendication 2, dans lequel l'étape d'infusion comprend une étape consistant à placer le fruit entaillé avec la solution aqueuse de pectinase dans une enceinte à vide à un vide compris entre environ 84,66 x 10³ et 101,59 x 10³ Pa (entre 25 et 30 pouces de mercure).

4. Procédé selon l'une quelconque des revendications 1 à 3, dans lequel:
l'étape itérative comprend une étape de réapprovisionnement en la solution aqueuse de pectinase pour remplacer la partie de la solution infusée dans l'agrume frais et emportée par lui et
l'étape itérative elle-même est répétée plusieurs fois.

5. Procédé selon la revendication 1, dans lequel on applique, à la suite de l'immersion du fruit dans une solution aqueuse de pectinase, plusieurs impulsions de pressions positives au fruit immergé pour faire infuser la solution dans le fruit.

6. Procedé selon la revendication 5, dans lequel les impulsions de pressions appliquées au cours de l'étape d'immersion et d'application présentent des pressions relatives comprises entre environ 137,88 x 10³ et 275,76 x 10³ (entre 20 et 40 p.s.i.), et sont séparées les unes des autres par des périodes ayant des pressions relatives d'environ 0 Pa (0 p.s.i.).

7. Procédé selon la revendication 5 ou la revendication 6, dans lequel les impulsions de pressions appliquées au cours de l'étape d'immersion et d'application possèdent chacune des durées d'environ 15 s et sont séparées les unes des autres par des périodes durant environ 5 s.

8. Procédé selon l'une quelconque des revendications précédentes, comprenant de plus, à la suite de l'étape d'élimination, une étape de séparation des segments de fruits individuels les uns par rapport aux autres.
